(19)

Europäisches Patentamt
European Patent Office
Office européen des brevets

(11) **EP 1 777 969 A1**

(12) **EUROPEAN PATENT APPLICATION**

(43) Date of publication:
**25.04.2007 Bulletin 2007/17**

(51) Int Cl.:
***H04N 7/46*** (2006.01)

(21) Application number: **05256302.0**

(22) Date of filing: **10.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **BRITISH TELECOMMUNICATIONS public limited company**
**London EC1A 7AJ (GB)**

(72) Inventor: **The designation of the inventor has not yet been filed**

(74) Representative: **Lloyd, Barry George William et al**
**BT Group Legal**
**Intellectual Property Department**
**PP C5A**
**BT Centre**
**81 Newgate Street**
**London EC1A 7AJ (GB)**

(54) **Adaptive video transmission with variable frame rate**

(57) Video signals are sent via a network, such as an internet protocol network, the bandwidth of which varies with time. The amount of data to be sent is controlled by varying the frame rate. This is achieved by (a) measuring the transmission capacity to the receiver; (b) determining the rate of change of transmission capacity; and (c) adjusting the transmitted video frame rate as a function of the said rate of change.

Figure 3 Sequence Diagram of Adaptive Video Frame Rate Application

EP 1 777 969 A1

**Description**

The present invention is concerned with the transmission of video signals via a network.

In the future, the next generation communication environment is envisaged as allowing users to roam freely and to communicate with each other at any time and any place [1]. Client devices with different capabilities, which range from low power mobile phones to high performance workstations, may be used for communications. Users will be interconnected by networks with various capacities, with packet loss rates that range from almost lossless transmission to quite error prone environments. The rapid development of the client device industry and the proliferation of network access technologies is expected to result in the extensive growth of bandwidth-intensive real-time multimedia internetworking applications (e.g. voice over IP, video streaming, video conferencing and so on).

Real-time multimedia transmission over a variable bandwidth network environment requires a strict guarantee of network bandwidth and of several other quality of service (QoS) parameters, such as end-to-end delay, delay variation and packet loss. Unfortunately, most of the current QoS mechanisms in existing networks (such as wireless and mobile networks) do not provide such guarantees. In dynamic and unpredictable network environments, due to diverse forms of mobility and interference at the air interface, it gives rise to varying bandwidth and dynamically changing error rates [2]. This further intensifies the challenge for consistent provision of QoS. Traditional QoS mechanisms (e.g. Integrated Services and Differentiated Services), which are typically designed for wired networks, assume a fixed network topology and a fixed amount of available resources. These are inadequate to satisfy users' QoS requirements or to utilize the system resources efficiently, especially in bandwidth-limited and error prone network environments.

In order to solve this, adaptive multimedia applications are proposed. By implementing adaptive applications, media quality can, in the case of bandwidth variation of network, be adapted appropriately. The bandwidth of the media stream can be scaled down to provide a degraded quality at the destination. In this invention, we are particularly interested in the implementation of video applications. Adaptive video applications use protocols such as Real-Time Streaming Protocol (RTSP) and Real-Time Protocol (RTP), to adapt to changing network conditions using a number of techniques. These techniques include hierarchical encoding, efficient compression, bandwidth smoothing, rate shaping, error control, and adaptive synchronization. Feedback from lower networking layers can be used by the application layer and this helps to match the transmission to the available bandwidth as well as to increase the robustness of the video transmission. However, the perceived quality of video applications is being neglected. Variations of frame rates are proposed in some of these adaptive mechanisms [3] [4]. However, abrupt changes of frame rates can annoy users and hence have a severe impact on the perceived quality of such video applications.

QoS provisioning is an important issue in real-time internetworking video applications. The dramatic fluctuation of network conditions further intensifies the problems of QoS provisioning. Under variable bandwidth network environments (such as users are moving from one network to another with different bandwidth capacity or network is being congested by heavy traffic), characteristics of video applications need to be adjusted in order to fit the requirements of the current operating network and also maintain the perceived QoS.

An IBM document on QoS policies [5] clearly states that "the priority for smooth video is higher than the priority for frame quality". It points out that the importance of smooth video is even more significant when users are watching high motion videos (such as sports programmes). Traditional adaptive frame rate variation mechanisms in video applications, which adjust the video requirements according to the rate supportable by the network, attempt to keep the quality of video constant by varying the frame rate. In these mechanisms, the perceived quality of video application is often degraded as frame rates are reduced to a much lower rate or being increased to a much higher rate in order to fit network conditions. The abrupt changes of frame rates (from higher rate to lower rate and vice versa), which cause jerkiness and unsteady video displays, annoy users who are expecting a smooth and continuous flow of video frames in real-time video applications. The users are able to notice the sudden change of frame rate in video transmission. For example, a video application may be sending video at 25 frames per second (fps) during normal network condition and frame rate is reduced to 8fps when network congestion is detected; the frame rate is then increased to 15fps again when network conditions improve. This drastic fluctuation of frame rates will affect the smoothness of the video display and hence have a severe impact on perceived quality.

References:

1. T. Takebayashi et al, Approaches to User-Centric Computing System for Ubiquitous Solutions, Fujitsu Sci. Tech. J., 39, 2, December 2003, p.261-269.

2. M. Naghshineh et al, End-to-End QoS Provisioning in Multimedia Wireless/Mobile Networks Using an Adaptive Framework, IEEE Communication Magazine November 1997.

3. J. Kim et al, TCP-Friendly Internet Video Streaming Employing Variable Frame-Rate Encoding and Interpolation, IEEE Transaction on Circuits and Systems for Video Technology, Vol.10, NO.7, October 2000.

[4] W. Guetz et al., U.S. Patent 6,091,777.

[5] IBM. Functions of mobile multimedia QoS control. http://www.trl.ibm.com/projects/mmqos/system_e.htm.

According to the present invention there is provided a method of transmitting video over a network to a receiver, comprising repeatedly

(a) measuring the transmission capacity to the receiver;
(b) determining the rate of change of transmission capacity;
(c) adjusting the transmitted video frame rate as a function of the said rate of change.

Other aspects of the invention are set out in the claims.

Some embodiments of the invention will now be described, with reference to the accompanying drawings.

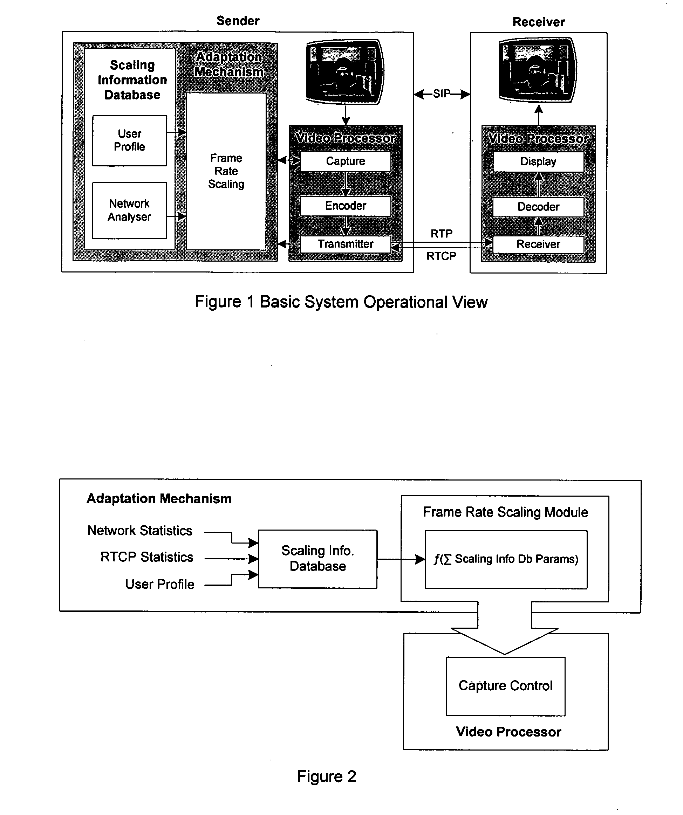

The basic system operational view of our implementation is depicted in Figure 1. The figure shows one-way communication (sender-to-receiver), however, it can be implemented as a two-way communication application (client-to-client). Session Initiation Protocol (SIP) can be used to start a communication session between two or more clients. Real-Time Protocol (RTP) and

Real-Time Control Protocol (RTCP) can be used as underlying transport layer to send data packets and also control packets. In this implementation, Session Description Protocol (SDP) signalling can be used to reset the parameters of a video conferencing session and send them to the receiving end.

The video processor, which involves capture/display, encoder/decoder and transmitter/receiver, is mainly for media processing. The adaptation mechanism appears as a standalone module in the application. A scaling information database extracts and stores network statistical information (monitored periodically using a timer) and user profiles (set by users). The frame rate scaling module is the core mechanism which calculates a frame rate scaling factor based on information obtained from information database. A scaled frame rate will then be fed to the video processor for setting new video parameters.

Figure 2 illustrates how the different parameters influence the frame rate in the case of fluctuation in the network . To calculate the frame rate scaling factor, several parameters need to be taken into consideration. These parameters may include network statistics, RTCP feedback statistics and the user profile. The main contributor to the scaling factor is the network statistics, where the changes with time ($\Delta$bandwidth/$\Delta$t) are tracked.

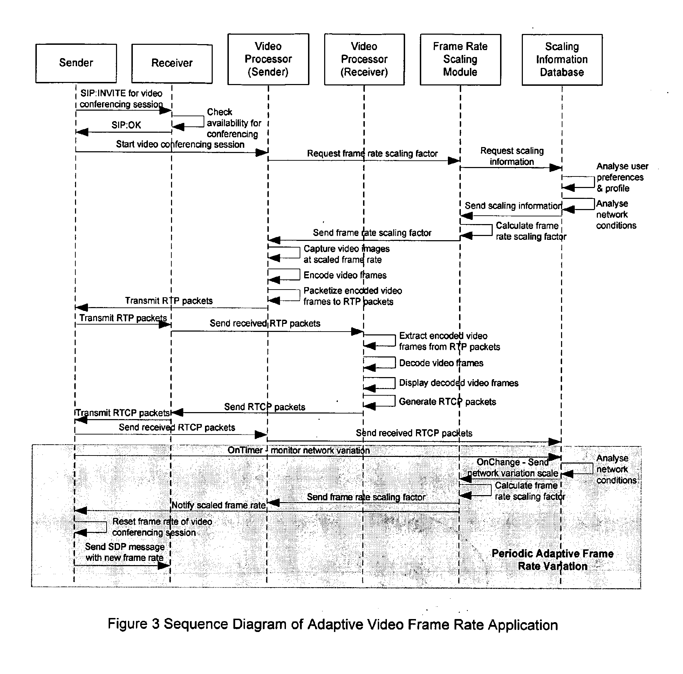

The sequence diagram (Figure 3) shows the activity flows of our implementation. The periodic adaptive frame rate variation mechanism (shaded portion) is applied to avoid the situation that frame rate variation is only incurred when network congestion is detected. A timer is initiated for periodic network condition monitoring at the client end. The frame rate will be scaled based on the scaling factor extracted from scaling information as discussed previously. This will improve the perceived quality by giving a gradual change of frame rate and smooth playbacks of video throughout entire communication.

The control mechanism essentially comprises the following steps:

(a) measurement, at intervals, of the network bandwidth $B(t_i)$;
(b) determination of the gradient $\{B(t_i) - B(t_{i-1})\}/(t_i - t_{i-1})$;
(c) determination of a scaling factor $M$, as a function of the gradient $m$;
(d) determination of a new frame rate, multiplying the existing rate by the scaling factor - subject however to the rate remaining within a range determined by preset maximum and minimum values..

In more detail:

(a) Bandwidth could be measured by any one of a number of conventional methods. If the communication session is peer to peer within a similar subnet, say, in an enterprise scenario, the backhaul link of the connecting equipment could expose its bandwidth availability through its SNMP agent residing in that particular equipment. This could be queried via SNMP calls. On the other hand, in an environment when there are several nodes in the path of its communication, an application level implementation of measuring its delay and thus bottleneck within that particular path could be used. This would suggest bandwidth availability.

Clearly it is important, in terms of reducing the risk of large changes in frame rate, to measure the bandwidth (and adjust the frame rate) at frequent intervals - that is to say, frequent in relation to the rate of change of network conditions. A typical rate might be every 10 seconds. It would be possible to measure the bandwidth once per frame, but this is not preferred, in that it involves additional overheads. In theory the bandwidth could be measured more often than once per frame, but naturally the frame rate adjustment cannot occur more often than once per frame.

(b) The gradient is determined by the formula given above. The use of the gradient rather than simply the absolute value of the bandwidth is significant because it introduces an element of prediction into the assessment of bandwidth availability.

(c) The determination of the scaling factor $M$ as a function of the gradient $m$ should be such that

If *m* is large & positive, multiplier is >1;
If *m* is small & positive, multiplier is > 1 (but smaller than when *m* is large);
If *m* is 0, multiplier is 1;
If *m* is small & negative, multiplier is <1;
*If m* is large & negative, multiplier is <1 (but smaller than when *m* is small and negative.

For example, a possible relationship for the situation where the bandwidth gradient is expected to vary over the range -50 to 50 kbit/s/s is: that M varies between 0.4 and 2.5. A simple, piecewise-linear implementation would be to specify that for m>0: M = 1 + 0.03 m; for m=0: M = 1; and for m<0: M = 1 + 0.012 m. However we prefer a nonlinear relationship in which frame rate changes are more extreme at the ends of the scale. Such a relationship would best be implemented by the use of a look-up table.
(d) A typical limit range for frame rate might be from 10 to 25 frames per second. Thus if the existing frame rate is $f_i$ then the new frame rate will be

$$f_{i+1} = Max\{Min\{Mf_i, 25\}, 10\}.$$

The user preferences referred to earlier could mean constraints on the level of adaptation that the user is prepared to live with in a congested network situation, i.e reaction time, image resolution resizing, colour depth. This could influence the extent for the need to switch to a lower frame rate.

In order to achieve better perceived quality of real-time internetworking video application in variable bandwidth network environments, degradation of video quality needs to be occur gracefully. In the method we have described, an adaptive mechanism, which resides in the video application, allows smooth variation of frame rates under variable bandwidth network environments. It varies frame rates gradually and hence minimises the jerkiness and flickering of video displays. A gradual degradation or upgrade of video quality gives an illusion to users that there is only little change in video quality throughout the communication period. The variation incurred is less aggressive and significant as compared with traditional frame rate variation mechanisms.

The method improves the perceived QoS of real-time internetworking video applications by implementing smooth variation frame rate mechanism of adaptive video application. An adaptation mechanism resides in a real-time internetworking multimedia application to adapt video quality dynamically to changes in network conditions. Network conditions are absorbed and analysed from time to time and network statistical analysis is then fed back to the video processor of the application. The application is then triggered to set the frame rate of the video to a requested rate based on the analysis of network conditions. The frame rate changes dynamically when network conditions vary - but not only when network congestion is detected. The degree of variation in frame rate depends on the degree of variation in network conditions (such as network utilization) and the variations of frame rates occur throughout the communication session. Hence, it prevents sudden changes in frame rate of the video transmission and helps to minimise the jerkiness of video displays under variable bandwidth conditions. User preferences and profiles may also be taken into account when frame rate is being adjusted. This further improves user perceived QoS of the application.

**Claims**

1. A method of transmitting video over a network to a receiver, comprising repeatedly

(a) measuring the transmission capacity to the receiver;
(b) determining the rate of change of transmission capacity;
(c) adjusting the transmitted video frame rate as a function of the said rate of change.

2. A method according to claim 1 in which the frame rate is adjusted to equal the existing frame rate multiplied by a factor which is a monotonically increasing function of rate of change of transmission capacity.

3. A method according to claim 2 in which the factor is a nonlinear function of rate of change of transmission capacity.

4. A method according to claim 3 in which the factor is obtained by means of a look-up table.

5. A method according to any one of the preceding claims in which the rate of change of transmission capacity is evaluated to determine whether an adjustment of frame rate is necessary at regular intervals.

Figure 1 Basic System Operational View

Figure 2

Figure 3 Sequence Diagram of Adaptive Video Frame Rate Application

**European Patent Office**

# EUROPEAN SEARCH REPORT

Application Number

EP 05 25 6302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | KIM JONGWON ET AL: "TCP-Friendly Internet Video Streaming Employing Variable Frame-Rate Encoding and Interpolation" IEEE TRANSACTIONS ON CIRCUITS AND SYSTEMS FOR VIDEO TECHNOLOGY, IEEE SERVICE CENTER, PISCATAWAY, NJ, US, vol. 10, no. 7, 1 October 2000 (2000-10-01), pages 1164-1177, XP002369021 ISSN: 1051-8215 * page 1168, left-hand column, paragraph B * | 1-5 | H04N7/46 |
| A | REED E C ET AL: "CONSTRAINED BIT-RATE CONTROL FOR VERY LOW BIT-RATE STREAMING-VIDEO APPLICATIONS" IEEE TRANSACTIONS ON CIRCUITS AND SYSTEMS FOR VIDEO TECHNOLOGY, IEEE SERVICE CENTER, PISCATAWAY, NJ, US, vol. 11, no. 7, July 2001 (2001-07), pages 882-889, XP001083363 ISSN: 1051-8215 * page 885, right-hand column - page 886, left-hand column * | 1-5 | |
| A | N. SEELAM, P. SETHI, W.FENG: "A hysteresis based approach for quality, frame rate, and buffer management for video streaming using TCP" SPRINGER VERLAG, INTERNATIONAL CONFERENCE ON MANAGEMENT OF MULTIMEDIA NETWORKS AND SERVICES, vol. 2216, 29 October 2001 (2001-10-29), pages 1-15, XP002374403 * paragraph [3.1.3] * | 1-5 | |

TECHNICAL FIELDS SEARCHED (IPC)

H04N

-/--

The present search report has been drawn up for all claims

| Place of search | Date of completion of the search | Examiner |
|---|---|---|
| Berlin | 28 March 2006 | Raeymaekers, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 05 25 6302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NEE P ET AL: "The performance of two-dimensional media scaling for Internet videoconferencing" NETWORK AND OPERATING SYSTEM SUPPORT FOR DIGITAL AUDIO AND VIDEO, 1997., PROCEEDINGS OF THE IEEE 7TH INTERNATIONAL WORKSHOP ON ST. LOUIS, MO, USA 19-21 MAY 1997, NEW YORK, NY, USA,IEEE, US, 19 May 1997 (1997-05-19), pages 223-234, XP010251701 ISBN: 0-7803-3799-9 * page 226, right-hand column * ----- | 1-5 | |

TECHNICAL FIELDS
SEARCHED (IPC)

The present search report has been drawn up for all claims

| Place of search | Date of completion of the search | Examiner |
|---|---|---|
| Berlin | 28 March 2006 | Raeymaekers, P |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 .................................................................................
& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• US 6091777 A, W. Guetz

### Non-patent literature cited in the description

• **T. TAKEBAYASHI et al.** Approaches to User-Centric Computing System for Ubiquitous Solutions. *Fujitsu Sci. Tech. J.,* 02 December 2003, vol. 39, 261-269

• **M. NAGHSHINEH et al.** End-to-End QoS Provisioning in Multimedia Wireless/Mobile Networks Using an Adaptive Framework. *IEEE Communication Magazine,* November 1997

• **J. KIM et al.** TCP-Friendly Internet Video Streaming Employing Variable Frame-Rate Encoding and Interpolation. *IEEE Transaction on Circuits and Systems for Video Technology,* October 2000, vol. 10 (7

• *IBM. Functions of mobile multimedia QoS control,* http://www.trl.ibm.com/projects/mmqos/system_e.ht m